# EUROPÄISCHE PATENTANMELDUNG

(11) **EP 4 589 831 A1**
(43) Veröffentlichungstag der Anmeldung: **23.07.2025**
(21) Anmeldenummer: 24152804.1
(22) Anmeldetag: 19.01.2024
(51) Int. Cl.: H02M 3/156, H02M 1/32

(54) **VERFAHREN ZUM BETRIEB EINER STROMVERSORGUNGSVORRICHTUNG**

(71) Anmelder: Siemens Aktiengesellschaft, 80333 München (DE)
(72) Erfinder: Schulz, Stefan, 2152 Gnadendorf (AT)
(74) Vertreter: Siemens Patent Attorneys

(57) **Zusammenfassung**

Die Erfindung betrifft ein Verfahren zum Betrieb einer Stromversorgungsvorrichtung (SVV), umfassend einen Leistungsteil (LT) zur Bereitstellung einer Ausgangsspannung (U) und eine Regelungsschaltung (RS) zur Regelung des Leistungsteils (LT), wobei die Regelungsschaltung (RS) einen ersten Regler (REG_U) und einen zweiten Regler (REG_I) umfasst, wobei die folgenden Verfahrensschritte ausgeführt werden:
- Erfassen oder Bilden einer Differenz eines Sollwerts der Ausgangsspannung (U_SOLL) und eines Istwerts der Ausgangsspannung (U_IST) durch den ersten Regler (REG_U);
- Berechnen und Ausgeben eines Soll-Mittelwerts eines ersten Stroms (I_1_M_SOLL) durch den ersten Regler (REG_U), wobei der Soll-Mittelwert des ersten Stroms (I_1_M_SOLL) vom ersten Regler (REG_U) auf einen zulässigen Maximalwert des Soll-Mittelwerts des ersten Stroms (I_1_M_MAX') begrenzt wird;
- Erfassen oder Bilden einer Differenz des Soll-Mittelwerts des ersten Stroms (I_1_M_SOLL) und eines Ist-Mittelwerts des ersten Stroms (I_1_M_IST) durch den zweiten Regler (REG_I);
- Berechnen einer Stellgröße (SG) durch den zweiten Regler (REG_I) und Ausgeben der Stellgröße (SG) an den Leistungsteil (LT).

## Beschreibung

Die Erfindung betrifft ein Verfahren zum Betrieb einer Stromversorgungsvorrichtung und eine Stromversorgungsvorrichtung.

Für Stromversorgungsvorrichtungen, beispielsweise für Schaltnetzteile, kommen je nach Anforderungen an die Regelungsschaltung bzw. an den zu regelnden Leistungsteil unterschiedliche Regelungs-Konzepte zum Einsatz.

Bei einer kaskadierten Regelung mit unterlagerter Strommittelwert-Regelung gibt ein Spannungsregler als Stellgröße einen Strom-Sollwerte aus, der dem gewünschten Mittelwert entspricht. Dieser Strom-Sollwert dient wiederum als Eingangsgröße für einen unterlagerten Strom-Regler, der diesen Sollwert mit dem Strom-Istwert vergleicht, und damit eine Stellgröße für den Leistungsteil ausgibt, die bspw. den Einschaltzeiten, der Pulsbreite, oder der Periodendauer der Transistoren entspricht.

Bei der Regelung des Leistungsteils ist jedoch nicht nur der Mittelwert des Stromes, sondern auch der Spitzenwert, entscheidend, da die Stromtragfähigkeit der verwendeten Komponenten begrenzt ist. Beispielsweise können Induktivitäten in Sättigung gehen oder Halbleiterbauelemente bei zu hohen Stromspitzenwerten ausfallen, was zum Defekt des Leistungsteils führen würde.

Stromversorgungen werden oft in Geräten bzw. Anlagen eingesetzt, bei denen fehlerhafte Zustände in dem von der Stromversorgungsvorrichtung versorgten Gerät bzw. Anlage nicht sofort zu einer Abschaltung der gesamten Versorgung führen dürfen. Hierzu ist es oft notwendig kurzzeitig einen wesentlich höheren Ausgangsstrom liefern zu können, beispielsweise um Lasten mit hohen Einschaltstromspitzen hochfahren zu können oder den Leitungsschutzschalter von fehlerhaften Abzweigen zum Auslösen zu bringen, damit die restliche Anlage ungestört weiterlaufen kann.

Um einen Ausfall des Gerätes bei kurzzeitigen Überlastsituation durch zu hohe Stromspitzenwerte zu verhindern, können einerseits die verwendeten Komponenten entsprechend überdimensioniert werden, sodass die unter allen Umständen maximal möglichen Stromspitzenwerte kein Problem für die Bauteile darstellen. Dies würde aber speziell bei den Induktivitäten mitunter zu entsprechend großen, schweren und teuren Komponenten führen, welche in weiterer Folge auch die mögliche Baugröße der Stromversorgung nach unten hin begrenzen würden.

Alternativ kann eine Überstrom-Notabschaltung verwendet werden, bei der der Strom im Leistungsteil überwacht wird, um diesen bei gefährlichen Spitzenwerten abzuschalten. Hierdurch wäre aber kein kontinuierlicher Betrieb bei kurzzeitigen Überlasten möglich, was entsprechend nachteilig für die Verfügbarkeit für das Gerät bzw. die Anlage ist, in der das Schaltnetzteil zum Einsatz kommt.

Der Erfindung liegt die Aufgabe zugrunde, ein Verfahren zum Betrieb einer Stromversorgungsvorrichtung anzugeben, das für eine hohe Verfügbarkeit der Stromversorgungsvorrichtung sorgt, die Bauelemente der Stromversorgungsvorrichtung schützt und eine kostengünstige und kompakte Dimensionierung der Stromversorgungsvorrichtung ermöglicht.

Die Aufgabe wird gemäß dem unabhängigen Hauptanspruch 1 gelöst durch ein Verfahren zum Betrieb einer Stromversorgungsvorrichtung, umfassend einen Leistungsteil zur Bereitstellung einer Ausgangsspannung und eine Regelungsschaltung zur Regelung des Leistungsteils, wobei die Regelungsschaltung einen ersten Regler und einen zweiten Regler umfasst, wobei die folgenden Verfahrensschritte ausgeführt werden:
- Erfassen oder Bilden einer Differenz eines Sollwerts der Ausgangsspannung und eines Istwerts der Ausgangsspannung durch den ersten Regler;
- Berechnen und Ausgeben eines Soll-Mittelwerts eines ersten Stroms durch den ersten Regler, wobei der Soll-Mittelwert des ersten Stroms vom ersten Regler auf einen zulässigen Maximalwert des Soll-Mittelwerts des ersten Stroms begrenzt wird;
- Erfassen oder Bilden einer Differenz des Soll-Mittelwerts des ersten Stroms und eines Ist-Mittelwerts des ersten Stroms durch den zweiten Regler;
- Berechnen einer Stellgröße durch den zweiten Regler und Ausgeben der Stellgröße an den Leistungsteil.

Durch das Verfahren wird, insbesondere durch die Begrenzung des Soll-Mittelwerts des ersten Stroms auf einen zulässigen Maximalwert des Soll-Mittelwerts des ersten Stroms durch den ersten Regler, erreicht, dass der zweite Regler eine Stellgröße ausgibt, die für eine hohe Verfügbarkeit der Stromversorgungsvorrichtung sorgt, die Bauelemente der Stromversorgungsvorrichtung schützt und eine kostengünstige und kompakte Dimensionierung der Stromversorgungsvorrichtung ermöglicht.

Der erste Regler kann dabei als Spannungsregler, insbesondere als digitaler Spannungsregler ausgebildet sein. Der zweite Regler kann dabei als Stromregler, insbesondere als digitaler Stromregler ausgebildet sein.

Das Erfassen oder Bilden einer Differenz im Verfahren jeweils durch den ersten Regler und den zweiten Regler hat jene Bedeutung, dass einem der Regler oder beiden Reglern eine Differenz zugeführt wird ("Erfassen"), welche beispielsweise durch einen Summierer gebildet wird oder, dass einer der Regler oder beide Regler die Differenz selbst bilden ("Bilden").

Die Stellgröße dient zur Ansteuerung von elektronischen Schaltern im Leistungsteil, insbesondere zur Ansteuerung von Transistoren, Feldeffekttransistoren (FET) oder Metall-Oxid-Halbleiter-Feldeffekttransistoren (MOSFET). Die Stellgröße gibt Einschaltzeiten und/oder Pulsbreiten und/oder Periodendauern der elektronischen Schalter an. Die Stellgröße kann ein pulsweitenmoduliertes Signal umfassen. Um eine Mehrzahl an elektronischen Schaltern ansteuern zu können kann die Stellgröße eine Mehrzahl an Signalen umfassen, welche jeweils einem elektronischen Schalter zugeordnet sind.

In den Unteransprüchen sind weitere vorteilhafte Maßnahmen aufgelistet, die beliebig miteinander kombiniert werden können, um weitere Vorteile zu erzielen.

Vorteilhaft ist es, wenn von der Regelungsschaltung die folgenden weiteren Verfahrensschritten ausgeführt werden:
- Erfassen des Soll-Mittelwerts des ersten Stroms;
- Erfassen eines zweiten Stroms aus dem Leistungsteil;
- Vergleichen des zweiten Stroms mit einem vorgegebenen Maximalwert des zweiten Stroms;
- Wenn der zweite Strom größer ist als der vorgegebene Maximalwert des zweiten Stroms: Abziehen eines Reduktionswerts vom Soll-Mittelwert des ersten Stroms und Ausgeben des Ergebnisses als zulässigen Maximalwert des Soll-Mittelwerts des ersten Stroms an den ersten Regler.

Durch diese Verfahrensschritte wird erreicht, dass der zulässige Maximalwert des Soll-Mittelwerts des ersten Stroms laufend geändert werden kann und in Abhängigkeit eines zweiten Stroms verringert werden kann. Damit kann zielgerichtet ein Bauelement im Leistungsteil oder ein Schaltungsteil im Leistungsteil, welches bzw. welcher vom zweiten Strom durchflossen wird, geschützt werden, indem der zulässige Maximalwert des Soll-Mittelwerts des ersten Stroms reduziert wird, wenn der zweite Strom größer ist als der vorgegebene Maximalwert des zweiten Stroms.

Der zweite Strom kann ein Spitzenwert sein. Der zweite Strom kann ein Strom im Leistungsteil sein, der durch ein vor Überstrom zu schützendes Bauelement, beispielsweise durch ein elektronisches Schaltelement oder durch eine Induktivität, oder einen Schaltungsteil fließt.

Der vorgegebene Maximalwert des zweiten Stroms kann von einer Bauelement- oder Schaltungsteilspezifikation vorgegeben sein.

Das Vergleichen des zweiten Stroms mit einem vorgegebenen Maximalwert des zweiten Stroms kann mit einem analogen Komparator erfolgen.

Der Reduktionswert kann dabei ein festgelegter, absoluter Wert sein. Der Reduktionswert kann auch proportional zur Differenz des zweiten Stroms und des Maximalwerts des zweiten Stroms sein. Der Reduktionswert kann auch proportional zum Soll-Mittelwert des ersten Stroms sein, also einen prozentualen Wert des Soll-Mittelwerts des ersten Stroms darstellen.

Vorteilhaft ist es, wenn der Reduktionswert einen konstanten Wert aufweist oder variabel ist, insbesondere proportional zur Differenz des zweiten Stroms und des vorgegebenen Maximalwerts des zweiten Stroms.

Durch einen konstanten Wert des Reduktionswerts wird das Verfahren vereinfacht. Durch einen Reduktionswert, der proportional zur Differenz des zweiten Stroms und des Maximalwerts des zweiten Stroms ist, kann bei hohen Überlastsituationen besonders schnell auf eine große Überschreitung des Maximalwerts des zweiten Stroms reagiert und gegengesteuert werden.

Vorteilhaft ist es, wenn das Abziehen des Reduktionswerts einmal pro Schaltperiode des Leistungsteils ausgeführt wird.

Dadurch kann auf die Reaktion des Leistungsteils auf den reduzierten zulässigen Maximalwert des Soll-Mittelwerts des ersten Stroms gewartet werden und nur wenn nötig der Reduktionswert erneut vom Soll-Mittelwert des ersten Stroms abgezogen werden. Damit wird die Stabilität und die Zuverlässigkeit der Stromversorgungsvorrichtung weiter erhöht.

Vorteilhaft ist es, wenn ein Merker gesetzt wird, wenn der zweite Strom größer ist als der vorgegebene Maximalwert des zweiten Stroms, und dass der Merker gelöscht wird, wenn diese Bedingung nicht erfüllt ist.

Dadurch kann eine erkannte Überlastsituation dokumentiert und einer weiteren Auswertung zugeführt werden.

Vorteilhaft ist es, wenn von der Regelungsschaltung die folgenden weiteren Verfahrensschritte ausgeführt werden:
- Prüfen einer ersten Bedingung, wobei die erste Bedingung erfüllt ist, wenn der zulässige Maximalwert des Soll-Mittelwerts des ersten Stroms kleiner ist als ein vorgegebener Maximalwert des Soll-Mittelwerts des ersten Stroms;
- Prüfen einer zweiten Bedingung, wobei die zweite Bedingung erfüllt ist, wenn der Merker nicht gesetzt ist;
- Hinzufügen eines Steigungswerts zum zulässigen Maximalwert des Soll-Mittelwerts des ersten Stroms, wenn die erste Bedingung und die zweite Bedingung erfüllt ist.

Der vorgegebene Maximalwert des Soll-Mittelwerts des ersten Stroms stellt einen absoluten Maximalwert dar, der vom ersten Regler nicht überschritten werden kann. Der vorgegebene Maximalwert des Soll-Mittelwerts des ersten Stroms kann der Stromversorgungsvorrichtung von außen vorgegeben werden oder bereits in einem Initialzustand der Stromversorgungsvorrichtung vorgegeben sein. Er kann beispielsweise eine Grenze für die Dauerlastfähigkeit der Stromversorgungsvorrichtung darstellen. Der zulässige Maximalwert des Soll-Mittelwerts des ersten Stroms ist immer kleiner als der vorgegebene Maximalwert oder gleich dem vorgegebenen Maximalwert des Soll-Mittelwerts des ersten Stroms. Der zulässige Maximalwert des Soll-Mittelwerts des ersten Stroms stellt einen veränderlichen Wert dar, der kontinuierlich oder schrittweise angepasst wird.

Durch diese Verfahrensschritte wird erreicht, dass der zulässige Maximalwert des Soll-Mittelwerts des ersten Stroms wieder erhöht wird, wenn keine Überlastsituation mehr vorliegt. Damit wird die Stabilität und die Zuverlässigkeit der Stromversorgungsvorrichtung weiter erhöht.

Vorteilhaft ist es, wenn die Verfahrensschritte aus Anspruch 6, insbesondere das Prüfen der ersten Bedingung, das Prüfen der zweiten Bedingung und das Hinzufügen des Steigungswerts zum zulässigen Maximalwert des Soll-Mittelwerts des ersten Stroms, einmal pro Schaltperiode des Leistungsteils oder pro Takt eines periodischen Taktgebers ausgeführt werden.

Durch diese Verfahrensmerkmale kann auf die Reaktion des Leistungsteils auf den erhöhten zulässigen Maximalwert des Soll-Mittelwerts des ersten Stroms gewartet werden und dieser nur weiter erhöht werden, wenn die erste Bedingung und die zweite Bedingung auch in der folgenden Schaltperiode oder im folgenden Takt erfüllt sind. Damit wird die Stabilität und die Zuverlässigkeit der Stromversorgungsvorrichtung weiter erhöht.

Vorteilhaft ist es, wenn die Regelungsschaltung weiters eine Überwachungseinheit umfasst und die Überwachungseinheit zumindest einen der Verfahrensschritte der Ansprüche 2 bis 7 ausführt.

Die Überwachungseinheit kann dabei einen analogen Komparator zum Vergleich des zweiten Stroms mit dem vorgegebenen Maximalwert des zweiten Stroms umfassen. Die Überwachungseinheit kann einen digitalen Signalprozessor (DSP) zum Abziehen des Reduktionswerts vom Soll-Mittelwert des ersten Stroms und/oder zum Hinzufügen des Steigungswerts zum zulässigen Maximalwert des Soll-Mittelwerts des ersten Stroms umfassen. Die Überwachungseinheit kann Mittel zur Erfassung des zweiten Stroms und/oder des vorgegebenen Maximalwerts des zweiten Stroms und/oder des vorgegebenen Maximalwerts des Soll-Mittelwerts des ersten Stroms und/oder des Soll-Mittelwerts des ersten Stroms umfassen. Die Überwachungseinheit kann einen Speicher zum Abspeichern von einem dieser Werte oder einer Mehrzahl dieser Werte umfassen.

Vorteilhaft ist es, wenn der erste Strom ein zu regelnder Strom im Leistungsteil ist, insbesondere ein zu regelnder Strom durch eine Induktivität.

Der erste Strom kann auch ein Ausgangsstrom der Stromversorgungsvorrichtung sein.

Vorteilhaft ist es, wenn der zweite Strom ein Strom im Leistungsteil ist, der durch ein vor Überstrom zu schützendes Bauteil fließt, insbesondere durch ein elektronisches Schaltelement oder durch eine Induktivität.

Durch dieses Merkmal kann gezielt ein Bauelement vor einem Überstrom geschützt werden.

Vorteilhaft ist es, wenn der erste Strom und der zweite Strom den gleichen Strom bezeichnen.

Dadurch kann die Erfassung vereinfacht werden, wenn der erste Strom, der zur Regelung der Stromversorgungsvorrichtung durch den ersten Regler und den zweiten Regler genutzt wird, auch durch ein Bauelement fließt, das vor einem Überstrom geschützt werden soll.

Vorteilhaft ist es, wenn die Regelungsschaltung weiters eine Schaltung zur Mittelwertbildung umfasst, die den ersten Strom im Leistungsteil erfasst und einen Ist-Mittelwert des ersten Stroms ausgibt.

Die Aufgabe der Erfindung wird auch gelöst durch eine Stromversorgungsvorrichtung, umfassend einen Leistungsteil zur Bereitstellung einer Ausgangsspannung und eine Regelungsschaltung zur Regelung des Leistungsteils, wobei die Stromversorgungsvorrichtung dazu ausgebildet ist, das Verfahren nach einem der Ansprüche 1 bis 12 auszuführen.

Vorteilhaft ist es, wenn die Stromversorgungsvorrichtung als Schaltnetzteil, Hochsetzsteller, Tiefsetzsteller, Hoch-Tiefsetzsteller, Flusswandler oder Buck-Boost-Konverter ausgebildet ist.

Vorteilhaft ist es, wenn die Stromversorgungsvorrichtung nach einem der Ansprüche 13 oder 14, dadurch gekennzeichnet, dass die Regelungsschaltung als kaskadierte Regelung, insbesondere als kaskadierte Regelung mit unterlagerter Strommittelwert-Regelung, ausgebildet ist.

Im Folgenden wird die Erfindung anhand der in den Figuren dargestellten Ausführungsbeispiele näher beschrieben und erläutert.

Es zeigen beispielhaft:
Fig. 1: Einen schematischen Aufbau einer beispielhaften ersten Ausführungsvariante einer erfindungsgemäßen Stromversorgungsvorrichtung,
Fig. 2: Einen schematischen Aufbau einer beispielhaften zweiten Ausführungsvariante einer erfindungsgemäßen Stromversorgungsvorrichtung,
Fig. 3: Ein Flussdiagramm einer beispielhaften ersten Ausführungsvariante eines Teils eines erfindungsgemäßen Verfahrens, und
Fig. 4: Ein Flussdiagramm einer beispielhaften zweiten Ausführungsvariante eines Teils eines erfindungsgemäßen Verfahrens.

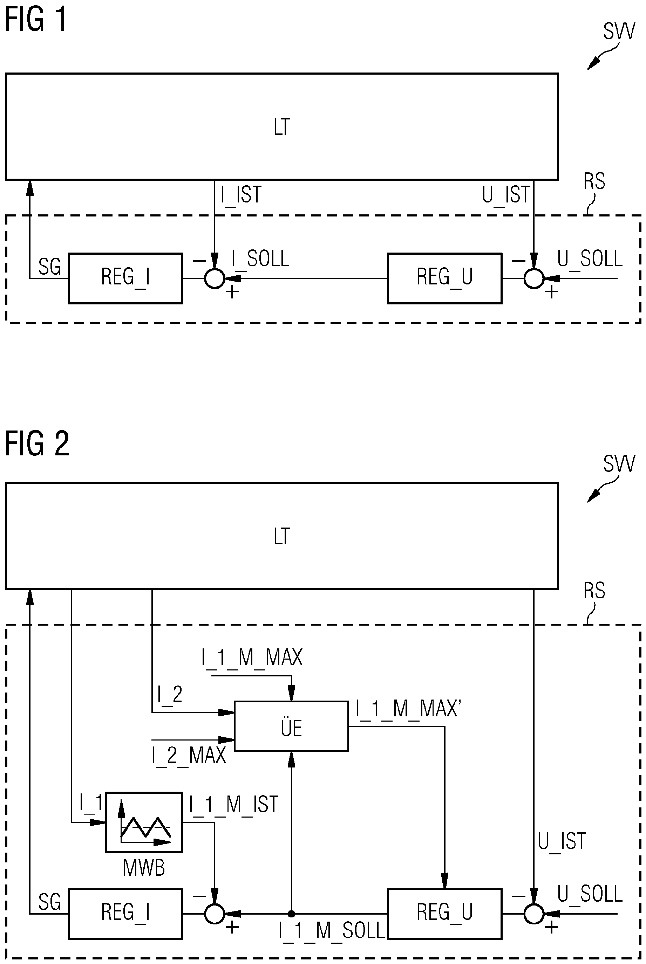

Fig. 1 zeigt einen schematischen Aufbau einer beispielhaften ersten Ausführungsvariante einer erfindungsgemäßen Stromversorgungsvorrichtung SW, die einen Leistungsteil LT und eine Regelungsschaltung RS umfasst. In diesem Ausführungsbeispiel ist die Regelungsschaltung RS als kaskadierte Regelung mit unterlagerter Strommittelwert-Regelung ausgebildet. Die Regelungsschaltung RS umfasst einen ersten Regler REG_U und einen zweiten Regler REG_I. In diesem Ausführungsbeispiel ist der erste Regler REG_U ein Spannungsregler und der zweite Regler REG_I ein Stromregler. Der erste Regler REG_U erfasst eine Differenz eines Sollwerts einer Ausgangsspannung U_SOLL zu einem Istwert einer Ausgangsspannung U_IST. Der Istwert der Ausgangsspannung U_IST ist dabei eine momentane Ausgangsspannung des Leistungsteils LT. Der Sollwert der Ausgangsspannung U_SOLL ist eine vorgegebene oder vorgebbare Ausgangsspannung des Leistungsteils LT. Der erste Regler REG_U gibt als Stellgröße einen Strom-Sollwert I_SOLL aus, der dem gewünschten Mittelwert entspricht, wobei dieser Mittelwert auf einen zulässigen Maximalwert begrenzt wird. Dieser Strom-Sollwert I_SOLL dient wiederum als Eingangsgröße für den unterlagerten zweiten Regler REG_I, der diesen Strom-Sollwert I_SOLL mit dem Strom-Istwert I_IST vergleicht, und damit eine Stellgröße SG für den Leistungsteil LT ausgibt.

Ausgehend von dieser ersten Ausführungsvariante der Stromversorgungsvorrichtung SW wird eine zweiten Ausführungsvariante der Stromversorgungsvorrichtung SW beschrieben.

Fig. 2 zeigt einen schematischen Aufbau einer beispielhaften zweiten Ausführungsvariante einer erfindungsgemäßen Stromversorgungsvorrichtung SW, die einen Leistungsteil LT und eine Regelungsschaltung RS umfasst. In diesem Ausführungsbeispiel ist die Regelungsschaltung RS als kaskadierte Regelung mit unterlagerter Strommittelwert-Regelung ausgebildet. Die Regelungsschaltung RS umfasst einen ersten Regler REG_U und einen zweiten Regler REG_I. In diesem Ausführungsbeispiel ist der erste Regler REG_U ein Spannungsregler und der zweite Regler REG_I ein Stromregler. Der erste Regler REG_U erfasst eine Differenz eines Sollwerts einer Ausgangsspannung U_SOLL zu einem Istwert einer Ausgangsspannung U_IST. Der Istwert der Ausgangsspannung U_IST ist dabei eine momentane Ausgangsspannung des Leistungsteils LT. Der Sollwert der Ausgangsspannung U_SOLL ist eine vorgegebene oder vorgebbare Ausgangsspannung des Leistungsteils LT. Der erste Regler REG_U berechnet einen Soll-Mittelwert eines ersten Stroms I_1_M_SOLL und gibt diesen aus, wobei der Soll-Mittelwert des ersten Stroms I_1_M_SOLL vom ersten Regler REG_U auf einen zulässigen Maximalwert des Soll-Mittelwerts des ersten Stroms I_1_M_MAX' begrenzt wird. Der zulässige Maximalwert des Soll-Mittelwerts des ersten Stroms I_1_M_MAX' kann vorgegeben sein oder in weiteren Verfahrensschritten berechnet werden. Der zweite Regler REG_I erfasst eine Differenz des Soll-Mittelwerts des ersten Stroms I_1_M_SOLL und eines Ist-Mittelwerts des ersten Stroms I_1_M_IST, berechnet eine Stellgröße SG und gibt die Stellgröße SG an den Leistungsteil LT aus. Der Ist-Mittelwert des ersten Stroms I_1_M_IST wird in diesem Ausführungsbeispiel durch eine Schaltung zur Mittelwertbildung MWB gebildet und bereitgestellt. Den ersten Strom I_1 erfasst die Schaltung zur Mittelwertbildung MWB aus dem Leistungsteil LT.

In diesem Ausführungsbeispiel wird der zulässige Maximalwert des Soll-Mittelwerts des ersten Stroms I_1_M_MAX' von einer Überwachungseinheit ÜE, die von der Regelungsschaltung RS umfasst ist, berechnet. Die Überwachungseinheit ÜE erfasst den Soll-Mittelwert des ersten Stroms I_1_M_SOLL, der vom ersten Regler REG_U berechnet wird, und einen zweiten Strom I_2 aus dem Leistungsteil LT. Die Überwachungseinheit vergleicht den zweiten Strom I_2 mit einem vorgegebenen Maximalwert des zweiten Stroms I_2_MAX. Für den Vergleich wird der Spitzenwert des zweiten Stroms I_2 berücksichtigt. Der vorgegebene Maximalwert des zweiten Stroms I_2_MAX ist jener Wert, der im Leistungsteil LT nicht überschritten werden darf, beispielsweise um ein Bauelement vor Überstrom zu schützen. Wenn der zweite Strom I_2 während einer Schaltperiode des Leistungsteils LT größer ist als der vorgegebene Maximalwert des zweiten Stroms I_2_MAX, wird von der Überwachungseinheit ein Reduktionswert RW vom Soll-Mittelwert des ersten Stroms I_1_M_SOLL abgezogen und das Ergebnis als zulässiger Maximalwert des Soll-Mittelwerts des ersten Stroms I_1_M_MAX' an den ersten Regler REG_U ausgegeben. Im Initialzustand des Verfahrens oder der Stromversorgungsvorrichtung SW ist der zulässige Maximalwert des Soll-Mittelwerts des ersten Stroms I_1_M_MAX' auf einen vorgegebenen Maximalwert des Soll-Mittelwerts des ersten Stroms I_1_M_MAX eingestellt.

Der erste Strom I_1 und der zweite Strom I_2 können unterschiedliche Ströme sein. Der erste Strom I_1 kann beispielsweise ein Ausgangsstrom der Stromversorgungsvorrichtung SW sein, wenn eine Regelung der Stromversorgungsvorrichtung SW über den Ausgangsstrom leichter möglich ist. Der zweite Strom I_2 kann ein Strom sein, der durch ein Bauelement fließt, welches vor einem Überstrom geschützt werden soll. Der erste Strom I_1 und der zweite Strom I_2 können auch den gleichen Strom bezeichnen bzw. sich auf den gleichen Strom beziehen.

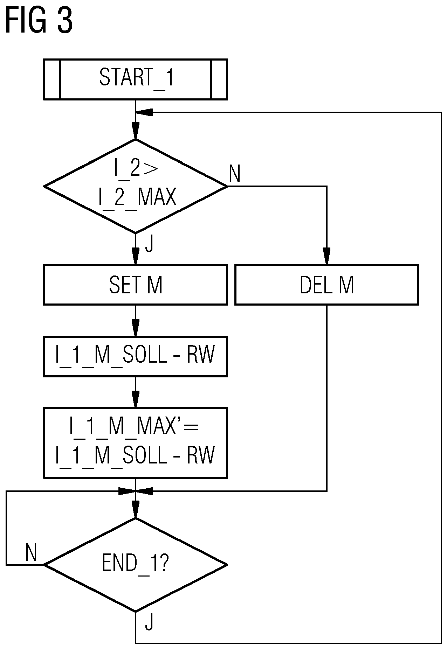

Fig. 3 zeigt ein Flussdiagramm einer beispielhaften ersten Ausführungsvariante eines Teils eines erfindungsgemäßen Verfahrens. START_1 bezeichnet den Beginn des Verfahrens. In einem Verfahrensschritt, bezeichnet durch das Feld "I_2 > I_2_MAX", wird geprüft, ob der zweite Strom I_2 größer ist als ein vorgegebener Maximalwert des zweiten Stroms I_2_MAX. Wenn diese Prüfung positiv ausfällt, gekennzeichnet mit dem Buchstaben "J", wird ein Merker M gesetzt, bezeichnet mit dem Feld "SET M", weiters wird vom Soll-Mittelwert des ersten Stroms I_1_M_SOLL der Reduktionswert RW abgezogen, bezeichnet durch das Feld "I_1_M_SOLL - RW", und weiters das Ergebnis als zulässiger Maximalwert des Soll-Mittelwerts des ersten Stroms I_1_M_MAX' an den ersten Regler REG_U ausgegeben, bezeichnet durch das Feld "I_1_M_MAX' = I_1_M_SOLL - RW". Anschließend wird der Ablauf einer aktuellen Schaltperiode des Leistungsteils LT geprüft, bezeichnet durch das Feld "END_1?". Ist die aktuelle Schaltperiode nicht abgelaufen, gekennzeichnet durch den Buchstaben "N", wird weiter geprüft. Ist die aktuelle Schaltperiode abgelaufen, gekennzeichnet durch den Buchstaben "J", so beginnt der beschriebene Ablauf erneut. Es wird also auf den Ablauf der aktuellen Schaltperiode des Leistungsteils LT gewartet. Fällt die Prüfung, ob der zweite Strom I_2 größer ist als ein vorgegebener Maximalwert des zweiten Stroms I_2_MAX, bezeichnet durch das Feld "I_2 > I_2_MAX", negativ aus, gekennzeichnet durch den Buchstaben "N", wird der Merker M gelöscht, falls er gesetzt ist, bezeichnet durch das Feld "DEL M" und wiederum auf den Ablauf der aktuellen Schaltperiode des Leistungsteils LT gewartet.

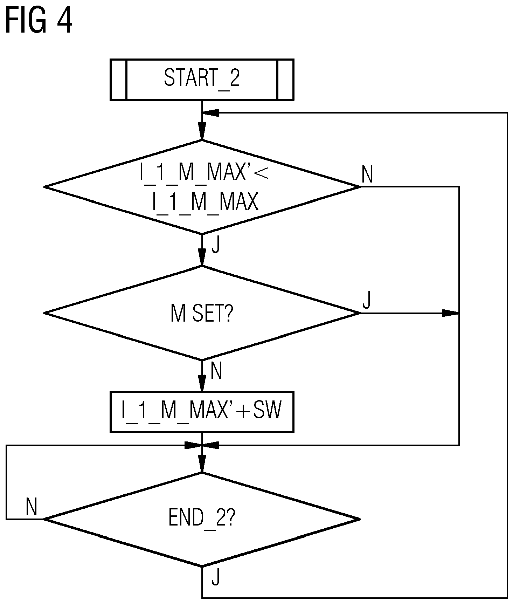

Fig. 4 zeigt ein Flussdiagramm einer beispielhaften zweiten Ausführungsvariante eines Teils eines erfindungsgemäßen Verfahrens. START_2 bezeichnet den Beginn des Verfahrens. In einem Verfahrensschritt, bezeichnet durch das Feld "I_1_M_MAX' < I_1_M_MAX", wird in einer ersten Bedingung geprüft, ob der zulässige Maximalwert des Soll-Mittelwerts des ersten Stroms I_1_M_MAX' kleiner ist als ein vorgegebener Maximalwert des Soll-Mittelwerts des ersten Stroms I_1_M_MAX. Wenn diese Prüfung positiv ausfällt, gekennzeichnet mit dem Buchstaben "J", wird in einer zweiten Bedingung geprüft, ob der Merker M gesetzt ist, bezeichnet durch das Feld "M SET?". Wenn diese Prüfung negativ ausfällt, gekennzeichnet mit dem Buchstaben "N", wird ein Steigungswert SW zum zulässigen Maximalwert des Soll-Mittelwerts des ersten Stroms I_1_M_MAX' hinzugefügt bzw. addiert. Anschließend wird der Ablauf einer aktuellen Schaltperiode des Leistungsteils LT oder das Periodenende eines periodischen Taktgebers geprüft, bezeichnet durch das Feld "END_2?". Ist die aktuelle Schaltperiode nicht abgelaufen oder das Periodenende eines periodischen Taktgebers nicht erreicht, gekennzeichnet durch den Buchstaben "N", wird weiter geprüft. Ist die aktuelle Schaltperiode abgelaufen oder das Periodenende eines periodischen Taktgebers erreicht, gekennzeichnet durch den Buchstaben "J", so beginnt der beschriebene Ablauf erneut. Es wird also auf den Ablauf der aktuellen Schaltperiode des Leistungsteils LT oder das Periodenende eines periodischen Taktgebers gewartet. Somit wird der zulässige Maximalwert des Soll-Mittelwerts des ersten Stroms I_1_M_MAX' immer wieder in Form einer Rampe langsam auf den vorgegebenen Maximalwert des Soll-Mittelwerts des ersten Stroms I_1_M_MAX erhöht, sofern keine Überstrom-Bedingung in Form eines gesetzten Merkers M erkannt wurde.

Fällt die Prüfung der ersten Bedingung negativ aus, gekennzeichnet mit dem Buchstaben "N", und/oder fällt die Prüfung der zweiten Bedingung positiv aus, gekennzeichnet mit dem Buchstaben "J", wird wiederum der Ablauf einer aktuellen Schaltperiode des Leistungsteils LT oder das Periodenende eines periodischen Taktgebers geprüft, bezeichnet durch das Feld "END_2?".

In der vorliegenden Erfindung bezeichnen vorgegebene Werte jene Werte, die der Stromversorgungsvorrichtung SW von außen vorgegeben werden können und sich aus Grenzwerten für Bauelemente oder Schaltungsteile bestimmen. Zulässige Werte bezeichnen jene Werte, die vom Verfahren laufend neu berechnet werden können. Die zulässigen Werte können mit den vorgegebenen Werten initialisiert werden.

In einer weiteren erfindungsgemäßen Ausführungsvariante überwacht eine Überwachungseinheit den Spitzenwert des zweiten Stroms I_2 im Leistungsteil kontinuierlich. Hat der Spitzenwert des zweiten Stroms I_2 in der abgelaufenen Schaltperiode des Leistungsteils LT den vorgegebenen Maximalwert des zweiten Stroms I_2_MAX überschritten, so wird ein Merker M gesetzt. Zusätzlich wird vom Soll-Mittelwert des ersten Stroms I_1_M_SOLL ein Reduktionswert RW abgezogen, der einen konstanten Wert aufweisen kann. Weiters wird der zulässige Maximalwert des Soll-Mittelwerts des ersten Stroms I_1_M_MAX' für den ersten Regler REG_U auf den nun um den Reduktionswert RW reduzierten Stromsollwert gesetzt, um zu verhindern, dass der Spannungsregler den Soll-Mittelwert des ersten Stroms I_1_M_SOLL weiter erhöht. Abschließend wird auf den Ablauf der aktuellen Schaltperiode des Leistungsteils LT gewartet. Ist der Spitzenwert des zweiten Stroms I_2 auch in der darauffolgenden Schaltperiode des Leistungsteils LT größer als der vorgegebene Maximalwert des zweiten Stroms I_2_MAX, so wird der Reduktionswert RW wiederum vom Soll-Mittelwert des ersten Stroms I_1_M_SOLL abgezogen und der zulässige Maximalwert des Soll-Mittelwerts des ersten Stroms I_1_M_MAX' für den ersten Regler REG_U auf den weiter reduzierten Stromsollwert gesetzt. Dieses Prozedere setzt sich Takt für Takt fort, bis der Spitzenwert des zweiten Stroms I_2 in der abgelaufenen Schaltperiode den vorgegebenen Maximalwert des zweiten Stroms I_2_MAX nicht mehr überschritten hat. In diesem Fall wird der Merker M gelöscht und es wird wieder auf den Ablauf der aktuellen Schaltperiode gewartet.

In weiteren Verfahrensschritten, welche parallel ablaufen können, wird der zulässige Maximalwert des Soll-Mittelwerts des ersten Stroms I_1_M_MAX' immer wieder in Form einer Rampe langsam auf den vorgegebenen Maximalwert des Soll-Mittelwerts des ersten Stroms I_1_M_MAX erhöht, sofern keine Überstrom-Bedingung erkannt wurde. Hierzu wird, ausgelöst durch einen periodischen Taktgeber, überprüft, ob der aktuelle zulässige Maximalwert des Soll-Mittelwerts des ersten Stroms I_1_M_MAX' für den ersten Regler REG_U kleiner als der vorgegebene Maximalwert des Soll-Mittelwerts des ersten Stroms I_1_M_MAX ist. In einem weiteren Schritt wird geprüft, ob der Merker M gesetzt ist, und nur wenn dieser nicht gesetzt ist (es wurde keine Überstrom-Bedingung in anderen Verfahrensschritten gemeldet) kann der zulässige Maximalwert des Soll-Mittelwerts des ersten Stroms I_1_M_MAX' wieder um einen Steigungswert SW erhöht werden. Ist der Merker M gesetzt da eine Überstrom-Bedingung in anderen Verfahrensschritten gemeldet wird, so bleibt der zulässige Maximalwert des Soll-Mittelwerts des ersten Stroms I_1_M_MAX' für den ersten Regler REG_U während der aktuellen Periode des Taktgebers unverändert.

## Patentansprüche

1. Verfahren zum Betrieb einer Stromversorgungsvorrichtung (SW), umfassend einen Leistungsteil (LT) zur Bereitstellung einer Ausgangsspannung (U) und eine Regelungsschaltung (RS) zur Regelung des Leistungsteils (LT), wobei die Regelungsschaltung (RS) einen ersten Regler (REG_U) und einen zweiten Regler (REG_I) umfasst, wobei die folgenden Verfahrensschritte ausgeführt werden:
- Erfassen oder Bilden einer Differenz eines Sollwerts der Ausgangsspannung (U_SOLL) und eines Istwerts der Ausgangsspannung (U_IST) durch den ersten Regler (REG_U);
- Berechnen und Ausgeben eines Soll-Mittelwerts eines ersten Stroms (I_1_M_SOLL) durch den ersten Regler (REG_U), wobei der Soll-Mittelwert des ersten Stroms (I_1_M_SOLL) vom ersten Regler (REG_U) auf einen zulässigen Maximalwert des Soll-Mittelwerts des ersten Stroms (I_1_M_MAX') begrenzt wird;
- Erfassen oder Bilden einer Differenz des Soll-Mittelwerts des ersten Stroms (I_1_M_SOLL) und eines Ist-Mittelwerts des ersten Stroms (I_1_M_IST) durch den zweiten Regler (REG_I);
- Berechnen einer Stellgröße (SG) durch den zweiten Regler (REG_I) und Ausgeben der Stellgröße (SG) an den Leistungsteil (LT).

2. Verfahren nach Anspruch 1, **dadurch gekennzeichnet, dass** von der Regelungsschaltung (RS) die folgenden weiteren Verfahrensschritten ausgeführt werden:
- Erfassen des Soll-Mittelwerts des ersten Stroms (I_1_M_SOLL);
- Erfassen eines zweiten Stroms (I_2) aus dem Leistungsteil (LT);
- Vergleichen des zweiten Stroms (I_2) mit einem vorgegebenen Maximalwert des zweiten Stroms (I_2_MAX);
- Wenn der zweite Strom (I_2) größer ist als der vorgegebene Maximalwert des zweiten Stroms (I_2_MAX): Abziehen eines Reduktionswerts (RW) vom Soll-Mittelwert des ersten Stroms (I_1_M_SOLL) und Ausgeben des Ergebnisses als zulässigen Maximalwert des Soll-Mittelwerts des ersten Stroms (I_1_M_MAX') an den ersten Regler (REG_U).

3. Verfahren nach Anspruch 2, **dadurch gekennzeichnet, dass** der Reduktionswert (RW) einen konstanten Wert aufweist oder variabel ist, insbesondere proportional zur Differenz des zweiten Stroms (I_2) und des vorgegebenen Maximalwerts des zweiten Stroms (I_2_MAX).

4. Verfahren nach einem der Ansprüche 2 oder 3, **dadurch gekennzeichnet, dass** das Abziehen des Reduktionswerts (RW) einmal pro Schaltperiode des Leistungsteils (LT) ausgeführt wird.

5. Verfahren nach einem der Ansprüche 2 bis 4, **dadurch gekennzeichnet, dass** ein Merker (M) gesetzt wird, wenn der zweite Strom (I_2) größer ist als der vorgegebene Maximalwert des zweiten Stroms (I_2_MAX), und dass der Merker (M) gelöscht wird, wenn diese Bedingung nicht erfüllt ist.

6. Verfahren nach Anspruch 5, **dadurch gekennzeichnet, dass** von der Regelungsschaltung (RS) die folgenden weiteren Verfahrensschritte ausgeführt werden:
- Prüfen einer ersten Bedingung, wobei die erste Bedingung erfüllt ist, wenn der zulässige Maximalwert des Soll-Mittelwerts des ersten Stroms (I_1_M_MAX') kleiner ist als ein vorgegebener Maximalwert des Soll-Mittelwerts des ersten Stroms (I_1_M_MAX);
- Prüfen einer zweiten Bedingung, wobei die zweite Bedingung erfüllt ist, wenn der Merker (M) nicht gesetzt ist;
- Hinzufügen eines Steigungswerts (SW) zum zulässigen Maximalwert des Soll-Mittelwerts des ersten Stroms (I_1_M_MAX'), wenn die erste Bedingung und die zweite Bedingung erfüllt ist.

7. Verfahren nach Anspruch 6, **dadurch gekennzeichnet, dass** die Verfahrensschritte aus Anspruch 6 einmal pro Schaltperiode des Leistungsteils (LT) oder pro Takt eines periodischen Taktgebers ausgeführt werden.

8. Verfahren nach einem der Ansprüche 2 bis 7, **dadurch gekennzeichnet, dass** die Regelungsschaltung (RS) weiters eine Überwachungseinheit (ÜE) umfasst, und dass die Überwachungseinheit (ÜE) zumindest einen der Verfahrensschritte der Ansprüche 2 bis 7 ausführt.

9. Verfahren nach einem der vorangehenden Ansprüche, **dadurch gekennzeichnet, dass** der erste Strom (I_1) ein zu regelnder Strom im Leistungsteil (LT) ist, insbesondere ein zu regelnder Strom durch eine Induktivität.

10. Verfahren nach einem der Ansprüche 2 bis 9, **dadurch gekennzeichnet, dass** der zweite Strom (I_2) ein Strom im Leistungsteil (LT) ist, der durch ein vor Überstrom zu schützendes Bauteil fließt, insbesondere durch ein elektronisches Schaltelement oder durch eine Induktivität.

11. Verfahren nach einem der Ansprüche 2 bis 10, **dadurch gekennzeichnet, dass** der erste Strom (1_1) und der zweite Strom (I_2) den gleichen Strom bezeichnen.

12. Verfahren nach einem der vorangehenden Ansprüche, **dadurch gekennzeichnet, dass** die Regelungsschaltung (RS) weiters eine Schaltung zur Mittelwertbildung (MWB) umfasst, die den ersten Strom (I_1) im Leistungsteil (LT) erfasst und einen Ist-Mittelwert des ersten Stroms (I_1_M_IST) ausgibt.

13. Stromversorgungsvorrichtung (SW), umfassend einen Leistungsteil (LT) zur Bereitstellung einer Ausgangsspannung (U) und eine Regelungsschaltung (RS) zur Regelung des Leistungsteils (LT), wobei die Stromversorgungsvorrichtung (SW) dazu ausgebildet ist, das Verfahren nach einem der Ansprüche 1 bis 12 auszuführen.

14. Stromversorgungsvorrichtung (SW) nach Anspruch 13, **dadurch gekennzeichnet, dass** die Stromversorgungsvorrichtung (SW) als Schaltnetzteil, Hochsetzsteller, Tiefsetzsteller, Hoch-Tiefsetzsteller, Flusswandler oder Buck-Boost-Konverter ausgebildet ist.

15. Stromversorgungsvorrichtung (SW) nach einem der Ansprüche 13 oder 14, **dadurch gekennzeichnet, dass** die Regelungsschaltung (RS) als kaskadierte Regelung, insbesondere als kaskadierte Regelung mit unterlagerter Strommittelwert-Regelung, ausgebildet ist.
